# EUROPÄISCHE PATENTANMELDUNG

(11) **EP 3 903 905 A1**
(43) Veröffentlichungstag der Anmeldung: **03.11.2021**
(21) Anmeldenummer: 21000123.6
(22) Anmeldetag: 29.04.2021
(51) Int. Cl.: B01D 45/02, B01D 45/08, B01D 46/00, B01D 50/00, B01D 53/04, B01D 53/44

(54) **LUFTFILTER**

(30) Priorität: 30.04.2020 DE 202020001855 U
(71) Anmelder: Hubbes, Hilmar, 32791 Lage-Kachtenhausen (DE)
(72) Erfinder: Hubbes, Hilmar, 32791 Lage-Kachtenhausen (DE)
(74) Vertreter: Rieke, Andreas

(57) **Zusammenfassung**

Bei einem mobilen, in einem Gehäuse angeordneten Luftfilter mit einem Aktivkohle-Filtereinsatz ist der Filtereinsatz (24) mit der Aktivkohle in luftdurchlässigen Beuteln oberseitig in dem Gehäuse (2) angeordnet und ist das Gehäuse (2) in einem oberen Bereich (3) seitlich und/oder oberseitig des Filtereinsatzes (26) mit Luftaustrittsöffnungen (4) versehen.

## Beschreibung

Die Erfindung betrifft einen mobilen, in einem Gehäuse angeordneten Luftfilter mit einem Aktivkohle-Filtereinsatz.

Die Verwendung von Aktivkohle in Filtern aller Art ist bekannt und bewährt.

Aufgrund ihrer großen Oberfläche bindet Aktivkohle eine Vielzahl von Schadstoffen eines Fluids, das die Aktivkohle durchströmt.

Luftfilter mit Aktivkohle-Filtereinsätzen finden sich fest verbaut beispielsweise in Kraftfahrzeugen, Klimaanlagen oder dergleichen. Auch sind Dunstabzugshauben bekannt, die über Aktivkohle-Filtereinsätze verfügen. Diese bekannten Luftfilter sind allerdings nicht geeignet, kurzfristig die Luft in Räumen zu reinigen, in denen sich viele Menschen aufhalten, beispielsweise in großen Büros, in mit Staub oder bspw. mit Öl- und/oder Wassernebeln belasteten Produktionsräumen oder dergleichen.

Da die Adsorptionseigenschaften der Aktivkohle sich im Laufe der Zeit deutlich verschlechtern, ist ein regelmäßiger Austausch der die Aktivkohle aufweisenden Filtereinsätze notwendig. Dies ist häuft mit erheblichem Aufwand verbunden.

Vor diesem Hintergrund macht die Erfindung es sich zur Aufgabe, einen Luftfilter zur Verfügung zu stellen, bei dem ein Filtereinsatz in einfacher Weise zu wechseln und der in einem hohen Maße flexibel einsetzbar ist.

Gelöst wird diese technische Problematik bei einem mobilen, in einem Gehäuse angeordneten Luftfilter mit einem Aktivkohle-Filtereinsatz gem. des Anspruchs 1 durch die Maßnahmen, dass der Filtereinsatz mit der Aktivkohl in luftdurchlässigen Beuteln oberseitig in dem Gehäuse angeordnet ist und dass das Gehäuse an in einem oberen Bereich seitlich und/oder oberseitig des Filtereinsatzes mit Luftaustrittsöffnungen versehen ist.

Der Luftfilter nach der Erfindung weist eine Vielzahl von Vorteilen auf. So ist in einfacher Weise nach dem Entfernen eines Gehäusedeckels der Aktivkohle-Filtereinsatz zugänglich und ist ein schneller Austausch der einzelnen Beutel, bspw. aus Leinen, oder eines die Beutel aufnehmenden Einsatzes mit der Aktivkohle ermöglicht.

Die verbrauchte Aktivkohle kann aufbereitet werden oder wird bei starker Verschmutzung zusammen mit dem Beutel verbrannt. Die Asche kann als Düngermittel in der Landwirtschaft verwenden werden. Wird die Asche mit Wasser abgelöscht, entsteht eine Aschlauge, die als Reinigungsmittel verwendet werden kann.

Die Anordnung des Aktivkohle-Filtereinsatzes oberseitig in dem Gehäuse stellt zudem eine großflächige Filterfläche zur Verfügung. Insbesondere kann daran gedacht sein, dass der Filtereinsatz einen oberen Bereich des Gehäuses ausfüllt, insbesondere an die Gehäusewände angrenzt.

Weiter ist von Vorteil, dass unterhalb des Filtereinsatzes ein Sammelbehälter, ein Gebläse und ein Strömungszylinder in dem Gehäuse platzsparend angeordnet werden können. Eine kompakte Bauform des Luftfilters nach der Erfindung ist damit gewährleistet.

Darüber hinaus ist ein Ozongenerator in einem Gehäuse vorgesehen, das unterhalb oder in den Filtereinsatz hineinragend angeordnet ist. Ein solcher Ozongenerator tötet eine Vielzahl organischer Schadstoffe ab.

In konstruktiver Ausgestaltung ist vorgesehen, dass ein Luftansaugstutzen für die zu reinigende Raumluft selbst oder über eine Leitung in dem Sammelbehälter mündet, an dessen Luftaustrittsöffnung in Strömungsrichtung nachfolgend über eine Leitung das Gebläse angeschlossen ist. Zwar kann, bspw. in der Einlass- und/oder in der Luftaustrittsöffnung des Sammelbehälters, ein Sieb oder ein geeigneter Partikelfilter noch vorgesehen werden, jedoch wird bevorzugt darauf verzichtet, so dass die Wartung des Luftfilters auf den Austausch des Aktivkohle-Filtereinsatzes und das gelegentliche Entleeren des Sammelbehälters beschränkt ist.

Allerdings wird der Luftansaugstutzen mit wenigstens einem Magneten versehen, vorzugsweise mit einem Ringmagneten. Hierdurch werden die in der Luft vorhandenen Schwebeteilchen entmagnetisiert und können die entmagnetisierten Schwebeteilchen sich auf dem Boden des Sammelbehälters absetzen, da in dem Sammelbehälter aufgrund des vergrößerten Querschnittes der Ansaugdruck gering ist.

Das Gebläse wird mit einer konstanten Drehgeschwindigkeit betrieben, um Turbulenzen in dem Ansaugbereich des Luftfilters möglichst zu vermeiden. Darüber hinaus kann bei einer konstanten Drehgeschwindigkeit der Geräuschpegel des Gebläses minimiert werden, so dass der Betrieb des Luftfilters nach der Erfindung auch beispielsweise in einem Büro kaum störend ist.

Weiter ist vorgesehen, dass dem Gebläse über eine weitere Leitung nachfolgend ein Strömungszylinder mit gegenüber der weiteren Leitung vergrößertem Querschnitt angeschlossen ist. Hierdurch wird eine weitgehend konstante Luftströmung erzeugt, so dass der Strömungszylinder mit einem Sensor versehen sein kann, der die Strömungsgeschwindigkeit überwacht und damit den Verschmutzungsgrad des Aktivkohle-Filtereinsatzes.

In weiterer konstruktiver Ausgestaltung ist vorgesehen, dass über eine Leitung geringeren Querschnitts als der des Strömungszylinders der Ozongenerator mit einem Gehäuse größeren Querschnitts angeschlossen ist, in dem Bakterien und Viren abgetötet werden können.

Unter dem Filtereinsatz ist ein Freiraum weiter vorgesehen, in den die angesaugte Raumluft als Ozon-Luftgemisch eintritt. Damit wird eine großflächige Durchdringung des Aktivkohle-Filtereinsatzes erreicht.

In einer bevorzugten, konstruktiven Bauweise sind der Luftansaugstutzen mit Magnet(en), der Sammelbehälter mit der Luftaustrittsöffnung und der angeschlossenen Leitung, das Gebläse und das daran anschließende Gehäuse des Ozongenerators auf einer gemeinsamen Achse angeordnet.

Diese Bauform weist eine Vielzahl von strömungstechnischen Vorteile auf. Auf Druckverluste hervorrufende, mit Krümmungen versehene Leitungen kann bspw. verzichtet werden. Auch ist eine sehr kompakte Bauform bspw. von einem runden Querschnitt möglich.

Das Vorhersehen wenigstens eines in Strömungsrichtung vor der Luftaustrittsöffnung des Sammelbehälters angeordneten Pralltellers verhindert den Eintritt von Partikeln und insbesondere auch von Flüssigkeiten in die zu dem Gebläse führende Leitung..

Weiter ist ein Gassensor vorgesehen, der insbesondere das Ozon-Luftgemisch bspw. in dessen Gehäuse oder in dem Freiraum unter dem Filtereinsatz überwacht.

Zusätzlich ist ein Raumluftsensor vorgesehen, der die Umgebungsluft des Luftfilters überwacht. Ein solcher Raumluftsensor kann problemlos in dem Gehäuse des Luftfilters integriert werden. Weiterhin hat es sich als zweckmäßig erwiesen, wenn eine Füllstandsanzeige für den Sammelbehälter vorgesehen ist. Ein rechtzeitiges Entleeren des Sammelbehälters verhindert den Eintritt von Staubpartikeln oder dergleichen in die nachfolgenden Leitungen. Eine solche Füllstandsanzeige, gegebenenfalls auch für in dem Sammelbehälter aufgefangene Flüssigkeiten, die über einen Abfluss entsorgt werden können, kann in einem Bedienpaneel des Luftfilters integriert werden. Neben einer manuellen Bedienung über ein solches Bedienpaneel kann auch eine programmierbare und/oder sensorgesteuerte und/oder fernüberwachte Steuerung für den Betrieb des Luftfilters vorgesehen sein.

Eine große Mobilität des Luftfilters nach der Erfindung ist ferner durch die Maßnahme gegeben, dass das Gehäuse auf Rollen verfahrbar sein kann.

Der Luftfilter nach der Erfindung wird anhand der Zeichnung näher erläutert, in der lediglich ein Ausführungsbeispiel schematisch dargestellt ist. In der Zeichnung zeigt:
- Fig. 1: eine isometrische Außenansicht eines Luftfilters,
- Fig. 2: schematisch dessen Komponenten,
- Fig. 3: teilweise geschnitten ein zweites Ausführungsbeispiel und

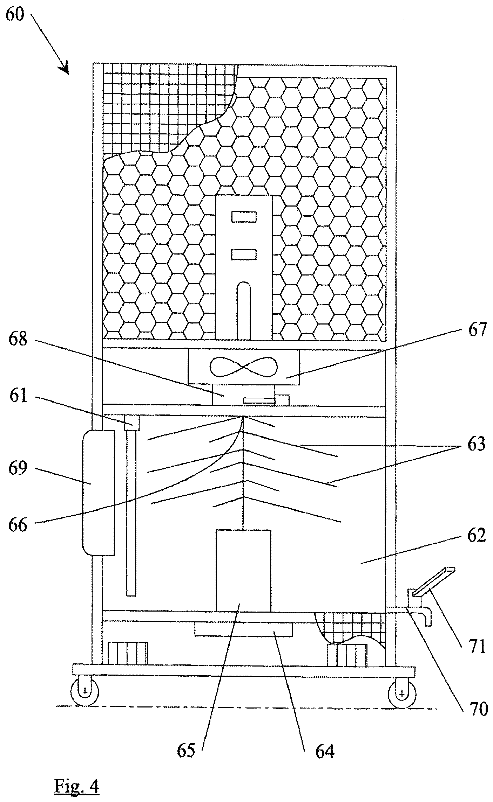

- Fig. 4: teilweise geschnitten ein drittes Ausführungsbeispiel.

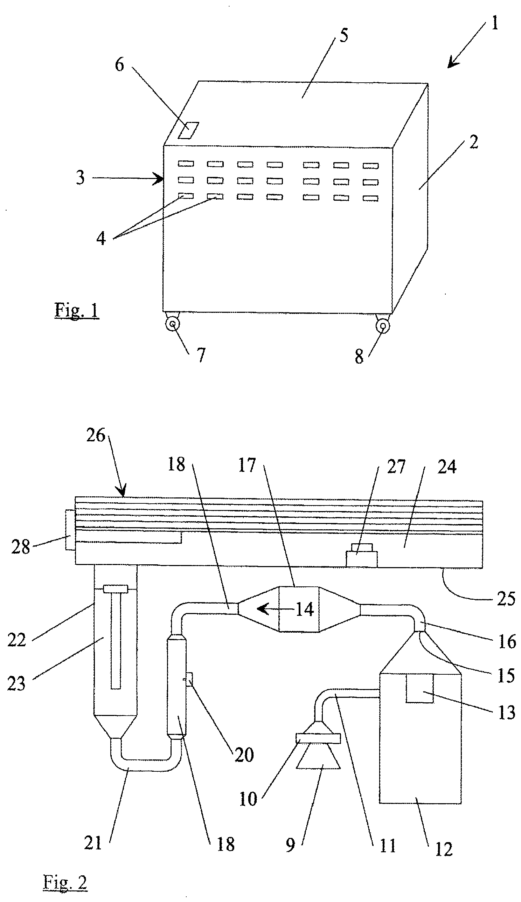

Figur 1 zeigt einen Luftfilter 1 von rechteckiger Grundfläche. Alternative Gestaltungen des Gehäuses 2 sind gleichwohl möglich, bspw. von rundem Querschnitt, wie nachfolgend noch beschrieben werden wird. In einem oberen Bereich 3 des Gehäuses sind Luftaustrittsöffnungen 4 angeordnet. Solche Luftaustrittsöffnungen können auch in dem Gehäusedeckel 5 angeordnet sein. Der Gehäusedeckel 5 ist aufklappbar oder abnehmbar, so dass das Innere des Luftfilters 1 leicht zugänglich ist.

Angedeutet ist ferner in dem Gehäusedeckel 5 ein Bedienpaneel 6 für Anzeigen, Schalter und dergleichen.

Rollen 7,8 unter dem Gehäuse 2 stellen eine hohe Mobilität des Luftfilters 1 sicher.

Figur 2 gibt schematisch die einzelnen Komponenten des Luftfilters 1 wieder. Über einen Luftansaugstutzen 9 wird die zu reinigende Raumluft angesaugt. Ein hier ringförmiger Magnet 10 entmagnetisiert die mit der Raumluft angesaugten Schwebeteilchen. Über eine Leitung 11 ist ein Sammelbehälter 12 von vergleichsweise großem Querschnitt angeschlossen, in dem sich diese Schwebeteilchen dann absetzen. Der Füllstand des Sammelbehälters 12 wird von einem Sensor 13 überwacht und von dem Bedienpaneel 6 angezeigt. In Strömungsrichtung gem. Pfeil 14 ist an eine Luftaustrittsöffnung 15 dem Sammelbehälter 12 nachfolgend über eine Leitung 16 ein Gebläse 17 angeschlossen, das vorzugsweise mit einer konstanten Drehzahl betrieben wird. Dem Gebläse 17 folgt ein Strömungszylinder 18 nach, der über eine Leitung 19 kleineren Querschnitts an das Gebläses 17 angeschlossen ist. Da der Strömungszylinder 18 für eine weitgehend gleichmäßige Raumluftströmung sorgt, kann ein Sensor 20 Geschwindigkeitsänderungen feststellen, womit auf den Verschmutzungsgrad des Luftfilters 1 geschlossen werden kann.

Eine vierte Leitung 21 verbindet den Strömungszylinder 18 mit einem Gehäuse 22 eines Ozongenerator 23. Das dort erzeugte Ozon-Luftgemisch tritt dann in einen Freiraum 24 über einem Zwischenboden 23 und unter einem Filtereinsatz 26 ein.

In dem Freiraum 24 wird dieses Ozon-Luftgemisch von einem Sensor 27 kontrolliert. Aus dem Freiraum 24 tritt nach Passieren der in luftdurchlässigen Beuteln aufgenommenen Aktivkohle des Filtereinsatzes 26 die dann gereinigte Raumluft durch die Luftaustrittsöffnungen 4 die Umgebung des Luftfilters 1 aus.

Die Luft in dieser Umgebung wird von einem weiteren Sensor 28 überwacht.

Anhand der Figur 2 wird ein weiteres Ausführungsbeispiel eines Luftfilters 30 erläutert, der insbesondre für kleine Räume wie Büros geeignet ist, in denen sich beispielsweise regelmäßig Stauballergiker aufhalten. Vorzugsweise von einem runden Querschnitt eines Durchmessers von 30 cm und einer Höhe von ca. 90 cm weist dieser Luftfilter 30 eine ausgesprochen kompakte Bauform auf.

In einem unteren Bereich des auf Rollen 31, 32 verfahrbaren Luftfilters 30 wird durch ein Gitter 33 oder geeignet ausgebildete Lufteintrittsöffnungen die Raumluft angesaugt.

Nach dem Durchtritt durch einen Ringmagneten 34 tritt die Raumluft durch einen Luftansaugstutzen 35 in den Sammelbehälter 36 ein. Dabei ragt der Luftansaugstutzen 35 bis in diesen Sammelbehälter 36. In dem Sammelbehälter 36 wird von einem Sensor 37 die Füllstandshöhe überwacht, so dass der Sammelbehälter 36 entsprechend geleert werden kann. Der Füllstand wird an einem Bedienpaneel 38 angezeigt, von dem aus auch die Steuerung des Luftfilters 30 erfolgt.

Vor einer Luftaustrittsöffnung 39 des Sammelbehälters 36 ist eine Prallplatte 40 angeordnet, durch die verhindert wird, dass Partikel, gegebenenfalls auch Flüssigkeiten, in eine an die Luftaustrittsöffnung 39 anschließende Leitung 41 eindringen. Über die Leitung 41 ist ein Gebläse 42 angeschlossen. In der Leitung 41 ist weiter ein Sensor 42 vorgesehen, der die Strömungsgeschwindigkeit vermisst. Dies erlaubt, im Betrieb auf den Wirkungsgrad des Luftfilters 30 zurückzuschließen.

Die von dem Gebläse 43 aus dem Sammelbehälter 36 abgezogene Raumluft tritt nach dem Gebläse 43 in das Gehäuse 44 eines Ozongenerators 45 ein. In dem Gehäuse 44 sind weiter Sensoren 46,47 für die Kontrolle des Ozon-Luftgemischs und des Sauerstoffs angeordnet.

Das Gehäuse 44 ragt in den Filtereinsatz 48, in dem die Aktivkohle in Beuteln aufgenommen ist. In diesem oberen Bereich 49 des Luftfilters 30 erfolgt der Austritt der gereinigten Raumluft aus dem Luftfilter 30, bspw. durch ein Gitter 50 oder geeignet angebrachte Luftaustrittsöffnungen, die gegebenenfalls auch in der Oberseite des Gehäuses 51 des Luftfilters 30 angeordnet sein können.

Zwischen einem Boden 52 und einem den Sammelbehälter luftdicht unterseitig abschließenden Zwischenboden 53 ist weiter ausreichend Platz für einen Hochspannungstransformator 54, insbesondere für den Betrieb des Ozongenerators 44, beispielsweise einer Betriebsspannung von 1.200 Volt, und einem Niederspannungstransformator 54, beispielsweise für eine Betriebsspannung von 12 oder 24 Volt, für den Betrieb der Sensoren und den Antrieb des Gebläses 42. Auf Grund des vergleichsweise hohen Gewichtes der Transformatoren 53,54 erhält dadurch der Luftfilter 30 nach der Erfindung einen tiefen Schwerpunkt, durch den die Standsicherheit erhöht wird.

Die kompakte Bauform des Luftfilters 30 wird insbesondere durch einen rotationssymmetrischen Aufbau zu einer zentralen Achse 56 erreicht. Auf dieser Achse 56 sind der Ringmagnet 34, der Luftansaugstutzen 35, der Prallteller 40 und die Luftaustrittsöffnung 39 des Sammelbehälters 36 wie auch das Gebläse 42 und das Gehäuse 43 des Ozongenerators 45 angeordnet. Eine solche weitestgehend rotationssymmetrische Anordnung ist auch strömungstechnisch günstig, da Verluste beispielsweise in gekrümmten Leitungen nicht auftreten. Vor diesem Hintergrund kann die Leistung des Gebläses 42 vergleichsweise gering gehalten werden.

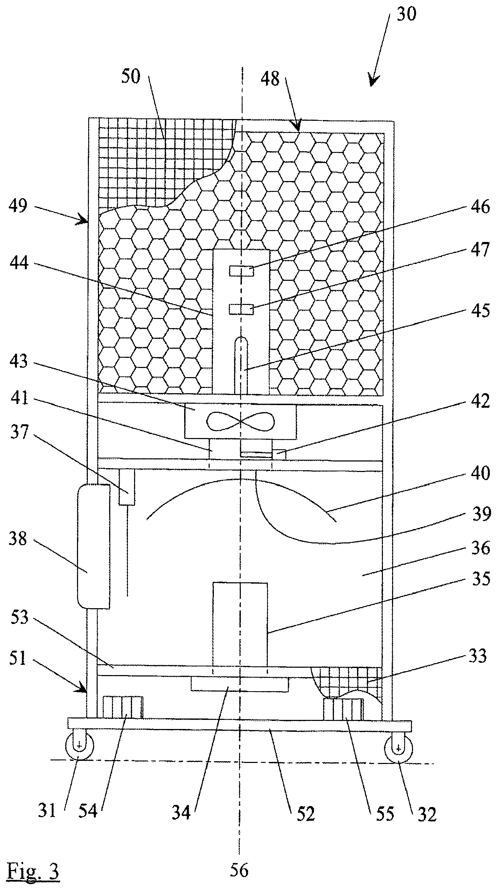

Der rotationssymmetrische Aufbau des Luftfilters 60 gemäß Fig.3 entspricht weitgehend dem vorangegangenen Ausführungsbeispiel. Allerdings ist schon auf Grund der Abmessungen des vorzugsweise tonnenförmigen Luftfilters 60 eines Durchmessers von ca, 59 cm bei einer Höhe von 2 m, einem typischen Fass entsprechend, an den Einsatz insbesondere in der Nähe von Produktionsanlagen gedacht, um Wasser- und/oder Ölnebel aus der Raumluft auszufiltern. Entsprechend ist der Sensor 61 in dem Sammelbehälter 62 auch für Flüssigkeiten auszulegen. Darüber hinaus verhindern eine Vielzahl von Pralltellern 63 den Austritt von durch Magneten 64 und dem Luftansaugstutzen 65 in den Sammelbehälter 62 eingesaugten Flüssigkeiten durch die Luftaustrittsöffnung 65 in die zu dem Gebläse 67 führende Leitung 68.

Wird von dem Sensor 61 ein vorgegebener Füllstand des Sammelbehälters 62 mit einer Flüssigkeit festgestellt und an dem Bedienpaneel 69 angezeigt, lässt sich der Sammelbehälter 62 in einfacher Weise entleeren. Hierfür ist der Sammelbehälter 62 mit einem Abfluss 70 versehen, der mit einem Hahn 71 geschlossen bzw. geöffnet werden kann. Alternativ kann ein solcher Abfluss auch aus einem einfachen Schlauch bestehen.

### Bezugszeichenliste:

1. Luftfilter
2. Gehäuse
3. Bereich
4. Luftaustrittsöffnung
5. Gehäusedeckel
6. Bedienpaneel
7. Rolle
8. Rolle
9. Luftansaugstutzen
10. Magnet
11.Leitung
12. Sammelbehälter
13. Sensor
14.Strömungsrichtung
15. Luftaustrittsöffnung
16. Leitung
17. Gebläse
18. Strömungszylinder
19. Leitung
20. Sensor
21.Leitung
22. Gehäuse
23. Ozongenerator
24. Freiraum
25. Zwischenboden
26. Filtereinsatz
27.Sensor
28.Sensor
29.
30. Luftfilter
31.Rolle
32. Rolle
33.Gitter
34. Ringmagnet
35. Luftansaugstutzen
36.Sammelbehälter
37. Sensor
38. Bedienpaneel
39. Luftaustrittsöffnung
40. Prallteller
41. Leitung
42. Sensor
43.Gebläse
44. Gehäuse
45. Ozongenerator
46. Sensor
47. Sensor
48. Filtereinsatz
49.Bereich
50. Gitter
51. Gehäuse
52. Boden
53. Zwischenboden
54. Transformator
55. Transformator
56. Achse
57.
58.
59.
60. Luftfilter
61. Sensor
62. Sammelbehälter
63. Prallteller
64.Magnet
65. Luftansaugstutzen
66. Luftaustrittsöffnung
67. Gebläse
68. Leitung
69. Paneel
70. Abfluss
71. Hahn

## Patentansprüche

1. Mobiler, in einem Gehäuse angeordneter Luftfilter mit einem Aktivkohle-Filtereinsatz, **dadurch gekennzeichnet, dass** der Filtereinsatz (24) mit der Aktivkohle in luftdurchlässigen Beuteln oberseitig in dem Gehäuse (2) angeordnet ist und dass das Gehäuse (2) in einem oberen Bereich (3) seitlich und/oder oberseitig des Filtereinsatzes (26) mit Luftaustrittsöffnungen (4) versehen ist.

2. Luftfilter nach einem oder mehreren der vorangehenden Ansprüche, **dadurch gekennzeichnet, dass** unterhalb des Filtereinsatzes (26) ein Sammelbehälter (12), ein Gebläse (17) und ein Strömungszylinder (18) in dem Gehäuse (2) angeordnet sind.

3. Luftfilter nach einem oder mehreren der vorangehenden Ansprüche, **dadurch gekennzeichnet, dass** ein Ozongenerator (23; 45)in einem Gehäuse (22; 44) vorgesehen ist, das unterhalb oder in den Filtereinsatz (26; 48) hineinragend angeordnet ist.

4. Luftfilter nach einem oder mehreren der vorangehenden Ansprüche, **dadurch gekennzeichnet, dass** ein Luftansaugstutzen (9) für die zu reinigende Raumluft selbst oder über eine Leitung (11) in dem Sammelbehälter (12) mündet, an dessen Luftaustrittsöffnung (15) in Strömungsrichtung (14) nachfolgend über eine Leitung (16) das Gebläse (17) angeschlossen ist.

5. Luftfilter nach Anspruch 4, **dadurch gekennzeichnet, dass** der Luftansaugstutzen (9) mit wenigstens einem Magneten (10) versehen ist.

6. Luftfilter nach einem oder mehreren der Anspruch 2 bis 5, **dadurch gekennzeichnet, dass** das Gebläse (17) mit konstanter Drehgeschwindigkeit betrieben wird.

7. Luftfilter nach einem oder mehreren der vorangehenden Ansprüche, **dadurch gekennzeichnet, dass** dem Gebläse (17) über eine weitere Leitung (19) nachfolgend ein Strömungszylinder (18) mit gegenüber der weiteren Leitung (19) vergrößertem Querschnitt angeschlossen ist.

8. Luftfilter nach Anspruch 7, dass der Strömungszylinder (18) mit einem Sensor (20) versehen ist, der die Strömungsgeschwindigkeit überwacht.

9. Luftfilter nach einem oder mehreren der vorangehenden Ansprüche, **dadurch gekennzeichnet, dass** über eine Leitung (21) geringeren Querschnitts als der des Strömungszylinders (18) der Ozongenerator (23) mit einem Gehäuse (22) größeren Querschnitts angeschlossen ist.

10. Luftfilter nach einem oder mehreren der vorangehenden Ansprüche, **dadurch gekennzeichnet, dass** unter dem Filtereinsatz (26) ein Freiraum (24) vorgesehen ist, in den die angesaugte Raumluft eintritt.

11. Luftfilter nach einem oder mehreren der vorangehenden
Ansprüche, **dadurch gekennzeichnet, dass** der Luftansaugstutzen (35) mit Magnet(en) (34), der Sammelbehälter (36) mit der Luftaustrittsöffnung (39) und der angeschlossenen Leitung (41), das Gebläse (43) und das daran anschließende Gehäuse (44) des Ozongenerators (45) auf einer gemeinsamen Achse (56) angeordnet sind.

12. Luftfilter nach einem oder mehreren der vorangehenden Ansprüche, **dadurch gekennzeichnet, dass** vor der Luftaustrittsöffnung (39) des Sammelbehälters (36) wenigstens ein Prallteller (40) angeordnet ist.

13. Luftfilter nach einem oder mehreren der vorangehenden Ansprüche, **dadurch gekennzeichnet, dass** ein Gassensor (25) und/oder ein Raumluftsensor (26) vorgesehen ist.

14. Luftfilter nach einem oder mehreren der vorangehenden Ansprüche, **dadurch gekennzeichnet, dass** der Sammelbehälter (62) mit einem Abfluss (70) versehen ist.

15. Luftfilter nach einem oder mehreren der vorangehenden Ansprüche, **gekennzeichnet durch** ein Bedienpaneel (6) und/oder durch eine programmierbare und/oder sensorgesteuerte und/oder fernüberwachte Steuerung.
